# EUROPÄISCHE PATENTANMELDUNG

(11) **EP 0 534 192 A1**
(43) Veröffentlichungstag der Anmeldung: **31.03.1993**
(21) Anmeldenummer: 92115096.7
(22) Anmeldetag: 03.09.1992
(51) Int. Cl.: H01S 3/139, G01S 7/48, H01S 3/11

(54) **Verfahren und Anordnung zur Frequenzstabilisierung eines gepulsten Lasers**

(30) Priorität: 27.09.1991 DE 4132328
(71) Anmelder: SIEMENS AKTIENGESELLSCHAFT, D-80333 München (DE)
(72) Erfinder: Brumme, Gerhard, Dr. rer. nat., W-8088 Eching (DE); Hidvegi-Barstorfer, Dr. rer. nat., W-8016 Weissenfeld (DE)

(57) **Zusammenfassung**

Bei einem Heterodyn-System wird zur Stabilisierung des Lasersenders (LS) der sowieso vorhandene Lokaloszillator (LO) des Überlagerungsempfängers (ÜE) herangezogen, wobei zunächst der LO über eine Stabilisierungseinheit (5) frequenzstabilisiert wird, dann in einem 1. Signalweg ein in Korrelation mit dem Frequenzhub des LO stehendes Ausgangssignal (S) der Stabilisierungseinheit (5) einer Laser-Steuereinheit (6) zugeführt wird, welche den gepulsten Laser (1) des Lasersenders (LS) bei einer bestimmten Frequenzlage des LO auslöst, dann in einem 2. Signalweg nach Auslösung des Lasers (1) die im Detektor (D) des Überlagerungsempfängers (ÜE) gebildete Zwischenfrequenz (ZF) ausgewertet und mit einem Sollwert verglichen und bei Abweichung der ZF vom Sollwert der Laser (1) über eine Frequenzsteuereinheit (S) auf Linienmitte stabilisiert wird. Das Verfahren ist insbesondere für Heterodyn-Lasermeßsysteme (Radar, Lidar) mit CO₂-Lasern geeignet.

## Beschreibung

Die Erfindung betrifft ein Verfahren zur Stabilisierung der Frequenz eines gepulsten Lasers, mit einem heterodynfähigen Lasersender und einem Überlagerungsempfänger mit einem cw-Laser als Lokaloszillator und einem Detektor sowie eine Anordnung zur Durchführung eines solchen Verfahrens.

Bei bestimmten Lasermeßsystemen, wie z.B. bei Laser-Radar-Systemen oder bei Lidar-Systemen, werden z.B. gepulste, heterodynfähige Lasersender eingesetzt. Diese müssen eine definierte frequenzstabile Strahlung emittieren, um heterodynfähig zu sein. Der Erfindung liegt daher die Aufgabe zugrunde, solche Lasersender in einer definierten Frequenz zu stabilisieren.

Diese Aufgabe wird bei einem Verfahren gemäß der Erfindung durch folgende Merkmale gelöst:
a) der Lokaloszillator wird über eine Stabilisierungseinheit frequenzstabilisiert,
b) von dem Detektor zu dem gepulsten Laser werden mindestens zwei Signalwege geführt,
c) im ersten Signalweg wird ein in Korrelation mit dem Frequenzhub des Lokaloszillators stehendes Ausgangssignal der Stabilisierungseinheit einer Laser-Steuereinheit zugeführt, welche den gepulsten Laser bei einer bestimmten Frequenzlage des Lokaloszillators auslöst,
d) nach Auslösung des gepulsten Lasers wird im zweiten Signalweg die im Detektor gebildete Zwischenfrequenz ausgewertet und mit einem Sollwert verglichen,
e) bei Abweichung der Zwischenfrequenz vom Sollwert wird der gepulste Laser über eine Frequenzsteuereinheit auf Linienmitte stabilisiert.

Bei einem erfindungsgemäßen Frequenzstabilisierungsverfahren ergibt sich eine kompakte, kostengünstige Anordnung, da der bei Überlagerungssystemen sowieso vorhandene Lokaloszillator gleichzeitig auch zur Stabilisierung des TE-Lasers herangezogen wird. Der Lokaloszillator wird somit gleichzeitig als Überlagerungselement und als Stabilisierungselement genutzt.

Insgesamt ergibt sich ein einfacher Aufbau mit zwei Lasern, der mit nur einem Detektor realisiert werden kann. Dieser dient dann der Überlagerung, dem Empfang des Zielechos, der internen Stabilisierung des Lokaloszillators und der Stabilisierung des Systems.

Mit einem nach dem erfindungsgemäßen Verfahren aufgebauten System können in vorteilhafter Weise auch schnell bewegte Ziele vermessen werden, ohne daß die Gefahr einer Zwischenfrequenz um die Nullage herum besteht. Dadurch kann der Vorteil des Heterodynempfangs voll ausgenutzt und eine hohe Zuverlässigkeit des Systems erreicht werden.

Vorzugsweise wird das erfindungsgemäße Verfahren in der Weise realisiert, daß
a) über das Detektorausgangssignal die ganze Leistung des Lokaloszillators oder ein Bruchteil dieser Leistung in der Stabilisierungseinheit gemessen, ausgewertet und im Leistungsmaximum stabilisiert wird, und daß
b) die Laser-Steuereinheit so ausgelegt ist, daß sie dem gepulsten Laser dann einen Steuerpuls zuführt, wenn sich das Ausgangssignal der Stabilisierungseinheit im Minimum befindet, der Lokaloszillator also im Umkehrpunkt U₁ bzw. U₂ seiner Frequenz steht.

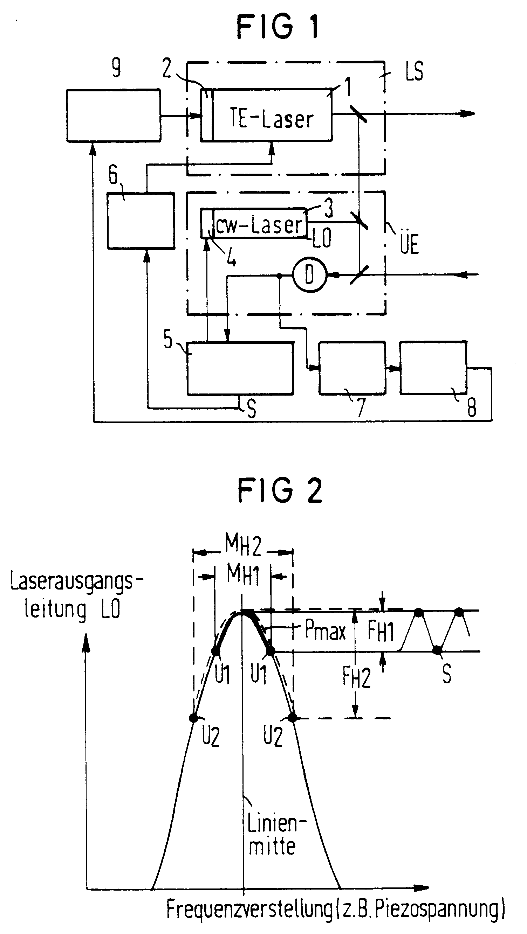

Das erfindungsgemäße Verfahren wird anhand eines in den Fig.1 und 2 gezeigten Ausführungsbeispiels einer Anordnung zur Durchführung des Verfahrens im folgenden näher beschrieben. Das dargestellte, insbesondere für Entfernungs- und Geschwindigkeitsmessungen vorgesehene Laser-Radar-System umfaßt einen TE-Laser 1 mit Frequenzverstelleinheit 2 als Sender LS und einen Überlagerungsempfänger ÜE mit einem cw-Laser 3 mit Frequenzverstelleinheit 4 als Lokaloszillator LO und einen Detektor D zum Empfang des Zielechos sowie eine Stabilisierungseinheit 5 für den Lokaloszillator. Über das Detektorausgangssignal wird die ganze Ausgangsleistung des Lokaloszillators LO oder ein Bruchteil dieser Leistung in der Stabilisierungseinheit 5 gemessen und ausgewertet und mit einem Dither-Stabilisierungsverfahren im Leistungsmaximum gewobbelt, d.h. die Frequenzverstelleinheit 4 des Lokaloszillators wird so im Leistungsmaximum gewobbelt, daß der Lokaloszillator im Leistungsmaximum stabilisiert wird. Fig. 2 zeigt die Stabilisierung der Ausgangsleistung des Lokaloszillators LO im Maximum der Linienmitte in einer dick ausgezogenen Kurve Pₘₐₓ. Hierbei ergibt sich entsprechend der Modulationsamplitude M_{H1} oder M_{H2} ein mehr oder minder großer Frequenzhub F_{H1} bzw. F_{H2} der ausgesandten Strahlung des Lokaloszillators LO, d.h. die Größe des Frequenzhubes um die Linienmitte ist von der Größe der Modulationsamplitude abhängig.

Dieses Frequenzstabilisierungsverfahren benutzt man beim erfindungsgemäßen Verfahren nun dazu, um eine definierte Frequenz des TE-Lasers 1 zu stabilisieren. Dies erfolgt nun in einem ersten Signalweg erfindungsgemäß in folgender Weise: Die Stabilisierungseinheit 5 liefert z.B. ein sinusförmiges Ausgangssignal S (Fig.2), das in Korrelation mit dem Frequenzhub des Lokaloszillators LO steht und einer Laser-Steuereinheit 6 zugeführt wird. Die Laser-Steuereinheit 6 ist so ausgelegt, daß sie dem TE-Laser 1 einen Steuerpuls dann zuführt, wenn sich das Ausgangssignal S der Stabilisierungseinheit 5 im Minimum befindet, was dem Frequenzumkehrpunkt U₁ bzw. U₂in Fig.2 entspricht. Zu diesem Zeitpunkt wird der TE-Laser 1 angesteuert und der Laserschuß ausgelöst. Dabei kann man die Laser-Steuereinheit 6 so auslegen, daß sich eine Pulsfolge von z.B. 20 Hz ergibt. Die Schußfolge wird also immer dann ausgelöst, wenn der Lokaloszillator LO im Umkehrpunkt U₁ bzw. U₂ seiner Frequenz steht.

Ein Bruchteil der gepulsten Laseremission des TE-Lasers 1 wird mit der Emission des Lokaloszillators LO im Detektor D überlagert. Die Zwischenfrequenz ZF im Detektor D wird in einem zweiten Signalweg über eine ZF-Auswerteeinheit 7 gemessen (die gemessene ZF gibt die Frequenzlage des TE-Lasers 1 relativ zum Lokaloszillator LO wieder) und mit einem Sollwert in einer Regeleinheit 8 verglichen. Liegt keine Abweichung der Zwischenfrequenz ZF zu dem Sollwert vor, so ist keine Regelung des TE-Lasers 1 nötig. Bei einer Abweichung der Zwischenfrequenz ZF vom Sollwert wird nun eine dem TE-Laser 1 im zweiten Signalweg vorgeschaltete Frequenzsteuereinheit 9 so angesteuert und damit die Frequenzlage des TE-Lasers 1 so beeinflußt, daß der Sollwert der Regeleinheit 8 erreicht wird, d.h. der TE-Laser 1 wird in seiner Frequenz relativ zum Lokaloszillator LO stabilisiert.

Bei dem erfindungsgemäßen Verfahren wird der TE-Laser 1 in vorteilhafter Weise in Linienmitte stabilisiert, so daß eine optimale Frequenzreinheit des TE-Lasers erreicht wird. Die Stabilisierung in Linienmitte ist in systemtechnischer Hinsicht von Vorteil.

Der Sollwert in der Regeleinheit 8 ist variabel einstellbar, da die Frequenzdifferenz nur vom Frequenzhub des Lokaloszillators LO abhängt, d.h. der TE-Laser 1 emittiert nach wie vor in der Linienmitte, aber man ist in der Frequenzwahl - solange der Lokaloszillator LO ein Umkehrsignal liefert - variabel. Damit ist die Abstimmbreite des Systems in relativ weiten Grenzen variabel, sie hängt nur vom möglichen Frequenzhub des Lokaloszillators LO ab.

## Patentansprüche

1. Verfahren zur Stabilisierung der Frequenz eines gepulsten Lasers, mit einem heterodynfähigen Lasersender und einem Überlagerungsempfänger mit einem cw-Laser als Lokaloszillator und einem Detektor,
**gekennzeichnet** durch folgende Merkmale:
a) der Lokaloszillator (LO) wird über eine Stabilisierungseinheit (5) frequenzstabilisiert,
b) von dem Detektor (D) zu dem gepulsten Laser (1) werden mindestens zwei Signalwege geführt,
c) im ersten Signalweg wird ein in Korrelation mit dem Frequenzhub des Lokaloszillator (LO) stehendes Ausgangssignal (S) der Stabilisierungseinheit (5) einer Laser-Steuereinheit (6) zugeführt, welche den gepulsten Laser (1) bei einer bestimmten Frequenzlage des Lokaloszillators (LO) auslöst,
d) nach Auslösung des gepulsten Lasers (1) wird im zweiten Signalweg die im Detektor (D) gebildete Zwischenfrequenz (ZF) ausgewertet und mit einem Sollwert verglichen,
e) bei Abweichung der Zwischenfrequenz (ZF) vom Sollwert wird der gepulste Laser (1) über eine Frequenzsteuereinheit (9) auf Linienmitte stabilisiert.

2. Verfahren nach Anspruch 1,
**dadurch gekennzeichnet**, daß
a) über das Detektorausgangssignal die ganze Leistung des Lokaloszillators (LO) oder ein Bruchteil dieser Leistung in der Stabilisierungseinheit (5) gemessen, ausgewertet und im Leistungsmaximum stabilisiert wird, und daß
b) die Laser-Steuereinheit (6) so ausgelegt ist, daß sie dem gepulsten Laser (1) dann einen Steuerpuls zuführt, wenn sich das Ausgangssignal (S) der Stabilisierungseinheit (5) im Minimum befindet, der Lokaloszillator (LO) also im Umkehrpunkt U₁ bzw. U₂ seiner Frequenz steht.

3. Anordnung zur Durchführung eines Verfahrens nach Anspruch 1 oder 2, **gekennzeichnet**, durch
a) einen TE-Laser (1) mit Frequenzverstelleinheit (2),
b) einen cw-Laser (3) als Lokaloszillator LO) mit Frequenzverstelleinheit (4),
c) einen Detektor (D) für den Überlagerungsempfänger,
d) einen ersten Signalweg zwischen dem Detektor (D) und dem TE-Laser (1) mit einer dem Detektor (D) nachgeschalteten Stabilisierungseinheit (5) und einer dem TE-Laser (1) vorgeschalteten Laser-Steuereinheit (6),
e) einen zweiten Signalweg zwischen dem Detektor (D) und dem TE-Laser (1) mit einer dem Detektor (D) nachgeschalteten ZF-Auswerteeinheit (7), einer Regeleinheit (8) zum Vergleich der Zwischenfrequenz (ZF) mit einem Sollwert und einer dem TE-Laser (1) vorgeschalteten Frequenzsteuereinheit (9).
